(19) Europäisches Patentamt
European Patent Office
Office européen des brevets

(11) **EP 3 157 158 B1**

(12) **FASCICULE DE BREVET EUROPEEN**

(45) Date de publication et mention
de la délivrance du brevet:
**24.01.2018 Bulletin 2018/04**

(51) Int Cl.:
***H02P 6/185*** *(2016.01)*     ***H02P 23/00*** *(2016.01)*
***H02P 6/08*** *(2016.01)*     *H02P 21/14* *(2016.01)*

(21) Numéro de dépôt: **16188265.9**

(22) Date de dépôt: **12.09.2016**

(54) **PROCÉDÉ DE COMMANDE POUR IDENTIFIER LES VALEURS D'INDUCTANCE D'UN MOTEUR ÉLECTRIQUE SYNCHRONE À RÉLUCTANCE VARIABLE**

**STEUERVERFAHREN ZUM IDENTIFIZIEREN DER INDUKTANZWERTE EINES SYNCHRONEN ELEKTROMOTORS MIT VARIABLER RELUKTANZ**

**CONTROL PROCESS FOR IDENTIFYING THE INDUCTANCE VALUES OF A VARIABLE-RELUCTANCE SYNCHRONOUS ELECTRIC MOTOR**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2015 FR 1559704**

(43) Date de publication de la demande:
**19.04.2017 Bulletin 2017/16**

(73) Titulaire: **Schneider Toshiba Inverter Europe SAS
27120 Pacy sur Eure (FR)**

(72) Inventeurs:
• **JEBAI, Al Kassem
27120 Vernon (FR)**
• **MALRAIT, François
27120 Jouy sur Eure (FR)**
• **DEVOS, Thomas
78955 Carrières sous Poissy (FR)**

(74) Mandataire: **Dufresne, Thierry
Schneider Electric Industries SAS
Service Propriété Industrielle
35 rue Joseph Monier - CS 30323
92506 Rueil-Malmaison Cedex (FR)**

(56) Documents cités:
**EP-A1- 1 641 114**     **EP-A1- 2 453 248**
**WO-A1-2012/000507**     **WO-A1-2016/126998**
**US-A1- 2007 241 715**     **US-A1- 2013 173 193**

**Description**

**Domaine technique de l'invention**

La présente invention se rapporte à un procédé de commande mis en oeuvre dans une unité de traitement associée à un convertisseur de tension employé pour commander un moteur électrique synchrone. Ce procédé de commande vise notamment à déterminer les valeurs d'inductance dudit moteur électrique.

L'invention s'applique pour un moteur électrique synchrone à réluctance variable.

**Etat de la technique**

Un moteur électrique est commandé en vitesse par un variateur de vitesse. Le variateur de vitesse comporte des phases d'entrée pour se connecter à un réseau d'alimentation électrique et des phases de sortie pour se connecter au moteur électrique. Il comporte classiquement un étage redresseur pour redresser la tension du réseau appliquée en entrée et un étage onduleur pour générer des tensions variables sur les phases de sortie à destination du moteur électrique.

A cause de la saturation magnétique, les valeurs d'inductance d'un moteur synchrone à réluctance variable varient en fonction du courant injecté dans le stator, appelé courant statorique.

La plupart du temps, les valeurs d'inductance du moteur sont cependant choisies constantes, ce qui génère une limite dans la performance du contrôle du moteur employé.

Il existe tout de même des méthodes pour déterminer les valeurs d'inductance du moteur. La demande de brevet EP1641114A1 propose une telle méthode employant un capteur de position positionné dans le moteur.

La demande de brevet EP2453248A1 propose une autre méthode d'identification des inductances du moteur. Cette méthode est basée sur l'injection d'impulsions de tension au moteur à l'arrêt. Le flux au stator est obtenu en intégrant la différence entre la tension totale aux bornes du stator et la tension au niveau de la résistance du moteur. Chaque valeur d'inductance du moteur est obtenue en dérivant le flux par rapport au courant. Cette méthode présente plusieurs inconvénients, notamment de nécessiter la connaissance parfaite de la résistance du moteur et d'obtenir des mesures précises de la tension appliquée au moteur.

Les demandes de brevets US2007/241715A1, WO2012/000507A1 et US2013/173193A1 décrivent d'autres solutions pour déterminer des valeurs d'inductance en fonction de différentes valeurs de courant.

Le but de l'invention est de proposer un procédé de commande mis en oeuvre pour déterminer les valeurs d'inductance d'un moteur synchrone à réluctance variable, ledit procédé étant simple, fiable et ne nécessitant ni l'emploi d'un capteur de position, ni la connaissance précise de la résistance du moteur ou de la tension appliquée au moteur.

**Exposé de l'invention**

Ce but est atteint par un procédé de commande d'un moteur électrique synchrone à réluctance variable, mis en oeuvre dans une unité de traitement, ladite unité de traitement étant associée à un convertisseur de puissance connecté par des phases de sortie audit moteur électrique et agencé pour exécuter une loi de commande en vue d'appliquer des tensions variables audit moteur électrique, le procédé comportant une phase d'identification d'une valeur d'inductance de flux dudit moteur électrique, cette phase d'identification comportant :

- Une étape de génération d'un courant de référence en entrée de ladite loi de commande, ledit courant de référence prenant successivement plusieurs valeurs suivant un profil prédéterminé,
- Pour chaque valeur de courant de référence, une étape de détermination d'une valeur de courant correspondant à des courants mesurés sur les phases de sortie du moteur,
- Pour chaque valeur de courant de référence, une étape de détermination par un module d'identification d'une valeur d'inductance en fonction d'une valeur de courant de référence appliquée en entrée, de la valeur correspondante de courant déterminée à partir des courants mesurés sur les phases de sortie et d'une valeur d'inductance prédéterminée ou variable,
- Pour chaque valeur de courant déterminé à partir des courants mesurés sur les trois phases de sortie, mémorisation de la valeur d'inductance correspondante déterminée lors de l'étape de détermination.

Selon une particularité, le courant de référence suit un profil variable en partant d'une valeur initiale définie minimale ou maximale jusqu'à une valeur finale, respectivement maximale ou minimale.

Selon une première variante de réalisation, le courant de référence prend plusieurs valeurs successives en suivant un profil linéaire.

Selon une deuxième variante de réalisation, le courant de référence prend plusieurs valeurs successives en suivant un profil en escalier à plusieurs échelons, chaque valeur du courant de référence suivant un échelon dudit profil.

Selon une autre particularité, le procédé comporte une phase d'exploitation qui suit la phase d'identification, ladite phase d'exploitation consistant à exploiter chaque valeur d'inductance mémorisée lors de la phase d'identification pour déterminer un flux de référence à appliquer au moteur.

L'invention concerne également un système de commande d'un moteur électrique synchrone à réluctance variable, comprenant une unité de traitement, ladite unité de traitement étant associée à un convertisseur de puissance connecté par des phases de sortie audit moteur électrique et agencé pour appliquer des tensions variables audit moteur électrique en exécutant une loi de commande, caractérisé en ce que la loi de commande comporte :

- Un module de génération d'une trajectoire d'un courant de référence,
- Un module de détermination, pour chaque valeur du courant de référence, d'une valeur de courant déterminée à partir de courants mesurés sur les phases de sortie,
- Un module d'identification de chaque valeur d'inductance du moteur électrique à partir d'une valeur de courant de référence, de la valeur de courant correspondante déterminée à partir des courants mesurés sur les phases de sortie et d'une valeur d'inductance prédéterminée ou variable,
- Pour chaque valeur de courant déterminé à partir des courants mesurés sur les trois phases de sortie, un module de mémorisation de la valeur d'inductance correspondante déterminée.

Selon une particularité du système, le module de génération du courant de référence est agencé pour lui faire suivre un profil variable en partant initialement d'une valeur définie minimale ou maximale jusqu'à une valeur finale, respectivement maximale ou minimale.

Selon une variante de réalisation, le courant de référence prend plusieurs valeurs successives en suivant un profil linéaire.

Selon une autre particularité, le courant de référence prend plusieurs valeurs successives en suivant un profil en escalier à plusieurs échelons, chaque valeur du courant de référence suivant un échelon dudit profil.

**Brève description des figures**

D'autres caractéristiques et avantages vont apparaître dans la description détaillée qui suit faite en regard des dessins annexés dans lesquels:

- la figure 1 illustre, de manière schématique, le principe de fonctionnement de l'invention,
- les figures 2A et 2B montrent des courbes d'évolution de l'inductance $L_d$ et du flux $\phi_d$ en fonction du courant $i_d$,
- les figures 3A et 3B représentent deux profils distincts suivis par le courant de référence pour la mise en oeuvre du procédé de commande de l'invention,
- la figure 4 montre des chronogrammes illustrant le principe d'adaptation en temps réel de l'inductance employée dans la loi de commande du moteur.

**Description détaillée d'au moins un mode de réalisation**

L'invention concerne un procédé de commande mis en oeuvre dans une unité de traitement associée à un convertisseur de puissance. Le procédé de commande est adapté spécifiquement pour la commande d'un moteur électrique M synchrone à réluctance variable. L'unité de traitement et le convertisseur de tension sont par exemple réunis dans un variateur de vitesse destiné à commander ledit moteur électrique M. L'unité de traitement comporte au moins un microprocesseur et une mémoire.

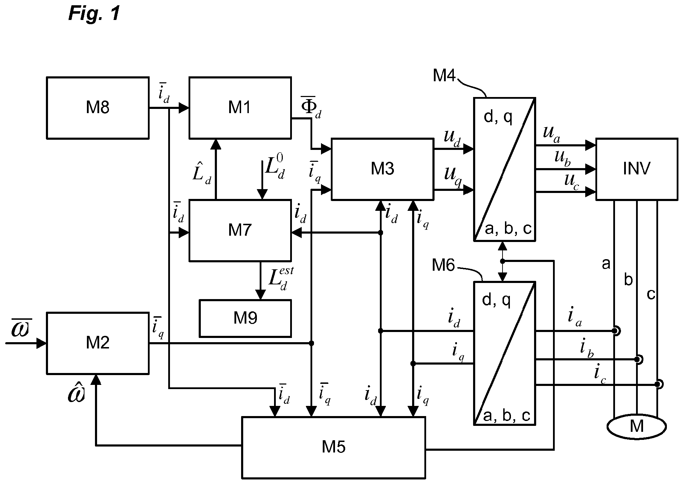

De manière connue, le convertisseur de puissance comporte au moins un étage onduleur INV connecté par plusieurs phases de sortie (trois phases a, b, c sur la figure 1) au moteur électrique M. L'étage onduleur comporte plusieurs transistors commandés pour appliquer des tensions variables sur les phases de sortie. La commande des transistors est réalisée par l'exécution d'une loi de commande dans l'unité de traitement.

De manière connue, une loi de commande en vitesse comporte les éléments suivants :

- Un courant de référence $\overline{i_d}$ sur l'axe d du repère d, q lié au rotor du moteur est appliqué en entrée d'un module M1.

- Sur la base du courant de référence et d'une valeur d'inductance $\hat{L}_d$, le module M1 détermine un flux de référence $\overline{\phi_d}$ sur l'axe d.

- Sur la base de la vitesse de référence $\overline{\omega}$ et d'une estimation de la vitesse réelle du moteur, un module M2 détermine un courant de référence $\overline{i_q}$ sur l'axe q.

- Sur la base du courant de référence $\overline{i_q}$, du flux de référence $\overline{\phi_d}$, du courant $i_d$ et du courant $i_q$ représentatifs des courants mesurés sur chaque phase de sortie, un module M3 détermine les tensions $u_d$, $u_q$ à appliquer au moteur M.

- A partir des tensions $u_d$, $u_q$, un module M4 applique une transformation de Park pour déterminer les tensions $u_a$, $u_b$, $u_c$ à appliquer sur chaque phase de sortie.

- Un module M5 est également agencé pour estimer la vitesse $\hat{\omega}$ du moteur qui est injectée dans le module M2.

- Un module M6 effectue une transformation de Park pour transformer les courants ia, ib, ic mesurés sur chaque phase de sortie en courants id, iq à injecter en entrée du module M3 et du module M5.

Le procédé de l'invention consiste à obtenir une courbe exprimant les valeurs d'inductance du moteur électrique en fonction du courant $i_d$. La démonstration suivante explique en quoi l'inductance du moteur varie en fonction de ce courant $i_d$.

Le modèle général d'un moteur électrique synchrone à réluctance variable dans le repère d,q lié au rotor du moteur s'exprime par les relations suivantes :

$$\begin{cases} \dfrac{d}{dt}\phi_d = u_d - Ri_d + \omega\phi_q \\[2mm] \dfrac{d}{dt}\phi_q = u_q - Ri_q - \omega\phi_d \\[2mm] \dfrac{J_M}{n_p}\dfrac{d\omega}{dt} = \dfrac{3}{2}n_p(i_q\phi_d - i_d\phi_q) - \tau_L \end{cases}$$

Dans lesquelles :

- $\begin{pmatrix} \phi_d \\ \phi_q \end{pmatrix}$ correspond au flux électrique,

- $\begin{pmatrix} i_d \\ i_q \end{pmatrix}$ correspond au courant du moteur,

- $\begin{pmatrix} u_d \\ u_q \end{pmatrix}$ correspond à la tension du moteur,

- R correspond à la résistance statorique du moteur,
- $J_M$ et $n_p$ sont les paramètres mécaniques du moteur,
- $\tau_L$ est le couple de charge,
- $\omega$ est la vitesse du moteur.

La saturation magnétique sur l'axe d est représentée par la relation entre le flux et le courant :

$$\phi_d = \varphi(i_d) \qquad (1)$$

Dans laquelle $\varphi$ est une fonction du courant $i_d$.

Par similitude au modèle linéaire et sans perte de généralité, la fonction $\varphi$ est écrite comme une fonction du courant d'axe d sous la forme suivante :

$$\varphi(i_d) = L_d(i_d) \times i_d \qquad (2)$$

Dans laquelle $L_d$ représente l'inductance du moteur (par analogie au modèle linéaire) en fonction du courant d'axe d.

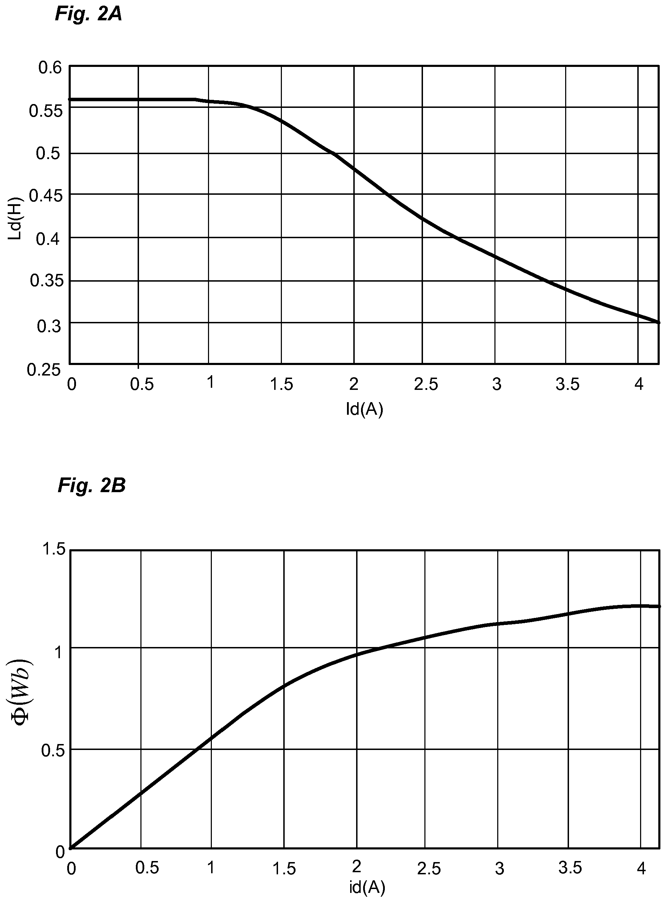

Les figures 2A et 2B montrent l'évolution de l'inductance $L_d$ et du flux $\phi_d$ en fonction du courant $i_d$.

Le procédé de commande de l'invention vise à reconstituer les courbes représentées sur les figures 2A et 2B de manière à pouvoir employer les valeurs d'inductance déterminées pendant le fonctionnement normal du variateur.

Le procédé de commande de l'invention comporte une phase d'identification mise en oeuvre pour identifier ces valeurs d'inductance.

La figure 1 représente la loi de commande du moteur incluant les blocs qui permettent de mettre en oeuvre cette phase d'identification. Une fois la phase d'identification terminée, la loi de commande du moteur n'exécute plus les modules nécessaires à cette phase d'identification.

### *Phase d'identification*

La phase d'identification est mise en oeuvre dans la loi de commande en dehors du fonctionnement normal du moteur et permet de déterminer la courbe de saturation décrite ci-dessus. Cette phase d'identification est mise en oeuvre initialement, par exemple au démarrage du variateur de vitesse, avant la phase d'exploitation et de contrôle du moteur.

Dans la suite de la description, nous emploierons les notations suivantes pour identifier les différentes inductances :

- L'inductance réelle du moteur : $L_d(i_d)$
- L'inductance utilisée dans la loi de commande du moteur : $\hat{L}_d$
- L'inductance estimée par la fonction d'identification : $L_d^{EST}$
- L'inductance utilisée pour initialiser la fonction d'identification : $L_d^0$

La phase d'identification est mise en oeuvre grâce à un module M7 spécifique inséré à la loi de commande. En référence à la figure 1, ce module M7 prend en entrée le courant de référence $\bar{i}_d$, le courant mesuré $i_d$, l'inductance utilisée pour initialiser la fonction d'identification $L_d^0$ et donne en sortie l'inductance $\hat{L}_d$ utilisée dans la loi de commande par le module M1 et l'inductance estimée $L_d^{EST}$.

Pour balayer toute la courbe de saturation décrite ci-dessus, il faut faire varier le flux de référence $\bar{\phi}_d$. Ainsi, pour chaque valeur de $(i_d, \bar{\phi}_d)$ on obtient un point sur la courbe de saturation.

La tension $u_q$ fournie par la loi de commande s'écrit à l'équilibre avec les grandeurs moteurs comme suit :

$$u_q = R i_q + \omega \phi_d$$

En soustrayant le terme résistif et en utilisant la connaissance de la vitesse, nous obtenons la relation suivante :

$$\phi_d = \varphi(i_d) = L_d(i_d)\, i_d = \bar{\phi}_d$$

où le flux de référence est $\bar{\phi}_d = \hat{L}_d\, \bar{i}_d$ et obtenu en sortie du module M1.

On obtient finalement :

$$L_d(i_d) = \frac{\hat{L}_d\, \bar{i}_d}{i_d} = \frac{\varphi(i_d)}{i_d} \qquad (2)$$

On comprend ainsi à partir de l'équation (3) ci-dessus que pour chaque valeur du courant mesuré $i_d$, on obtient une valeur d'inductance réelle $L_d(i_d)$.

Un module M8 est employé pour générer la trajectoire du courant de référence $\bar{i}_d$ et le courant de référence $\bar{i}_d$ ainsi généré est injecté dans le module M1 décrit ci-dessus.

Pour parcourir toute la courbe de saturation, la trajectoire de courant de référence $\bar{i}_d$ comporte les caractéristiques suivantes :

- La valeur du courant de référence $\bar{i}_d$ est initialisée à une valeur $\bar{i}_d^0$ qui permet de stabiliser la vitesse.

- Après la stabilisation de la vitesse, le courant de référence $\bar{i}_d$ est ramené à une valeur minimale $\bar{i}_d^{min}$.

- pour parcourir la courbe de saturation, le courant de référence $\overline{i}_d$ suit une trajectoire allant de la valeur minimale $\overline{i}_d^{min}$ à une valeur maximale $\overline{i}_d^{max}$.

Le passage de la valeur minimale $\overline{i}_d^{min}$ à la valeur maximale $\overline{i}_d^{max}$ peut se faire par plusieurs méthodes possibles. Cependant, pour que le contrôle reste stable pendant la phase d'identification, il faut que la différence entre $i_d$ et $\overline{i}_d$ reste compatible avec la stabilité du système contrôlé. Ainsi, tout type de trajectoire qui permet de maintenir la différence $\Delta i_d = i_d - \overline{i}_d$, sous un seuil correspondant à un fonctionnement stable du moteur peut être employé. Par exemple, le courant de référence peut suivre l'une des deux trajectoires suivantes :

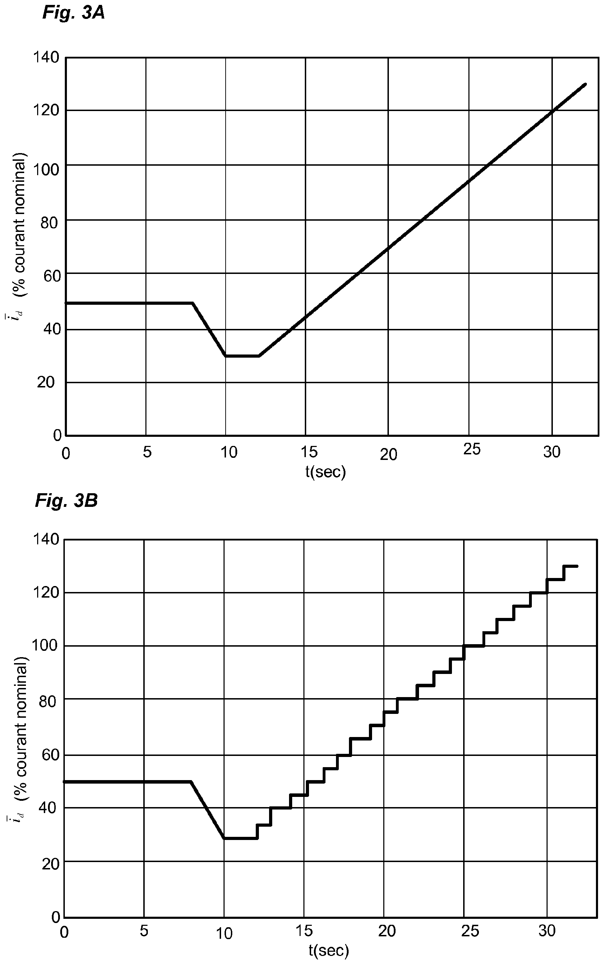

- trajectoire linéaire avec faible pente (figure 3A), ou
- trajectoire en escalier (figure 3B).

Selon l'invention, la détermination de l'inductance effectuée par le module M7 est réalisable de deux manières distinctes :

- par calcul direct, ou
- par adaptation en temps réel.

**- Par calcul direct**

La variation du courant de référence $\overline{i}_d$ permet de parcourir la courbe de saturation. Pour chaque valeur du courant de référence $\overline{i}_d$ on obtient une valeur de courant $i_d$ mesurée. Ainsi l'inductance estimée $L_d^{EST}$ du moteur qui correspond à ce courant $i_d$ est obtenue comme suivant à partir de l'équation (3) définie ci-dessus :

$$L_d^{EST} = \frac{\hat{L}_d \, \overline{i}_d}{i_d} \triangleq L_d(i_d)$$

où $\hat{L}_d$ est l'inductance utilisée dans le contrôle qui est constante dans ce cas et vaut $\hat{L}_d = L_d^0$.

Pour chaque niveau du courant de référence, l'inductance $L_d^{EST}$ obtenue par le calcul direct est enregistrée dans la mémoire pour être réemployée ultérieurement lors de la phase d'exploitation et de contrôle du moteur.

**- Par adaptation en temps réel :**

Dans ce cas l'inductance $\hat{L}_d$ n'est plus considérée comme constante mais variable en fonction de la différence de courant $\Delta i_d = i_d - \overline{i}_d$. Ainsi, l'inductance est obtenue en temps réel dans le module M7 en utilisant un algorithme d'estimation qui prend en entrée $\Delta i_d$ et donne en sortie $\hat{L}_d$. L'adaptation de l'inductance utilisée dans la loi de commande du moteur lors de la phase d'identification se fait en temps réel en fonction de l'écart du courant $\Delta i_d$ mesuré.

La loi d'évolution de $\hat{L}_d$ est la suivante :

$$\frac{d\hat{L}_d}{dt} = -k_p \Delta i_d - k_i \int \Delta i_d \qquad (4)$$

On comprend de cette loi d'évolution que lorsque la différence de courant $\Delta i_d = i_d - \overline{i}_d$ devient nulle, l'inductance $\hat{L}_d$ a convergé et est constante et l'inductance estimée $L_d^{EST}$ est enregistrée avec la valeur de $\hat{L}_d$ obtenue à l'issue de la convergence. On a alors :

$$L_d^{EST} = \hat{L}_d$$

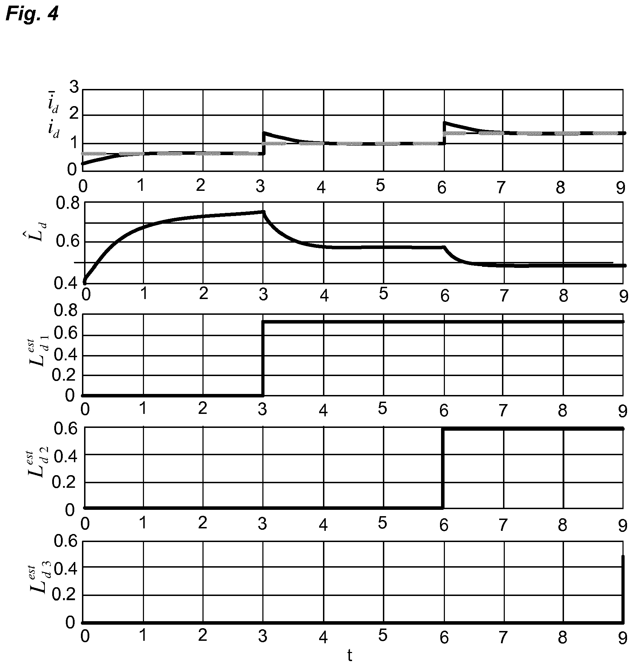

La figure 4 illustre le principe d'adaptation en temps réel de l'inductance. Sur cette figure, on peut voir que, à chaque fois que le courant mesuré $i_d$ a convergé vers le courant de référence $\bar{i}_d$ et donc que la différence entre ces deux courants est nulle, l'inductance $\hat{L}_d$ employée dans la loi de commande du moteur a convergé vers une valeur déterminée. Chaque valeur d'inductance obtenue après convergence est alors affectée à la valeur de l'inductance estimée et enregistrée ainsi dans la mémoire par un module de mémorisation M9. Sur la figure 4, trois valeurs distinctes $L_{d1}^{est}$, $L_{d2}^{est}$ et $L_{d3}^{est}$ sont enregistrées en mémoire.

La démonstration suivante permet de montrer que la valeur de l'inductance $\hat{L}_d$ converge bien vers l'inductance réelle $L_d(i_d)$ lorsque la différence de courant $\Delta i_d = i_d - \bar{i}_d$ converge vers zéro pour un courant de référence $\bar{i}_d$ fixé.

L'équation (3) est réarrangée comme suivant :

$$\hat{L}_d = \frac{\varphi(i_d)}{\bar{i}_d} \qquad (5)$$

Nous considérons $\bar{i}_d$ constant et nous dérivons l'équation (5) par rapport au temps :

$$\frac{d\hat{L}_d}{dt} = \frac{1}{\bar{i}_d} \times \frac{d\varphi}{di_d} \times \frac{di_d}{dt} \qquad (6)$$

Au premier ordre, $\frac{d\varphi}{di_d}$ est approximé comme suivant :

$$L_d^t(\bar{i}_d) = \frac{d\varphi}{di_d}(\bar{i}_d) > 0$$

En replaçant l'équation (4) dans l'équation (6) on obtient au premier ordre :

$$-k_p \Delta i_d - k_i \int \Delta i_d = \frac{1}{\bar{i}_d} \times L_d^t \times \frac{di_d}{dt} = \frac{1}{\bar{i}_d} \times L_d^t \times \frac{d\Delta i_d}{dt} + \frac{1}{\bar{i}_d} \times L_d^t \times \frac{d\bar{i}_d}{dt}$$

Finalement, on obtient :

$$\frac{d^2 \Delta i_d}{dt^2} + \left(\frac{\bar{i}_d k_p}{L_d^t}\right)\frac{d\Delta i_d}{dt} + \left(\frac{\bar{i}_d k_i}{L_d^t}\right)\Delta i_d = -\frac{d^2 \bar{i}_d}{dt^2}$$

En choisissant $k_p > 0$, $k_i > 0$ et $\bar{i}_d > 0$ et sachant que $L_d^t > 0$ alors le système ci-dessus est stable. Ainsi $\Delta i_d$ converge vers 0 et $\hat{L}_d$ vers $L_d$. Par exemple, les gains $k_p$ et $k_i$ sont choisis comme suit :

$$k_p = \frac{L_d^0}{\bar{i}_d} \times 2\xi_l \omega_l, \qquad\qquad k_i = \frac{L_d^0}{\bar{i}_d} \times \omega_l^2$$

Où $\xi_l$ est le coefficient d'amortissement et $\omega_l = 2\pi f_l$ avec $f_l$ la bande passante de l'estimateur de l'inductance; $L_d^0$ est l'inductance utilisée pour initialiser la fonction d'identification.

La procédure d'estimation d'inductance proposée permet ainsi d'avoir une courbe de saturation de l'inductance $L_d$ en fonction du courant $i_d$ qui couvre toute la plage de fonctionnement du moteur (figure 2).

Cette courbe est implémentée dans le drive en fonction du courant id et elle est prise en compte en temps réel pendant le contrôle du moteur.

La solution de l'invention permet en outre d'améliorer les performances du moteur, notamment de :

- ◦ Augmenter le couple maximale,
- ◦ Réduire la consommation d'énergie électrique,
- ◦ Améliorer la stabilité du contrôle du moteur.

## Revendications

1. Procédé de commande d'un moteur électrique (M) synchrone à réluctance variable, mis en oeuvre dans une unité de traitement, ladite unité de traitement étant associée à un convertisseur de puissance connecté par des phases de sortie (a, b, c) audit moteur électrique (M) et agencé pour exécuter une loi de commande en vue d'appliquer des tensions variables audit moteur électrique, ledit procédé comportant une phase d'identification d'une valeur d'inductance de flux dudit moteur électrique, cette phase d'identification comportant :

   - Une étape de génération d'un courant de référence $(\overline{i_d})$ en entrée de ladite loi de commande, ledit courant de référence $(\overline{i_d})$ prenant successivement plusieurs valeurs suivant un profil prédéterminé,
   - Pour chaque valeur de courant de référence $(\overline{i_d})$, une étape de détermination d'une valeur de courant $(i_d)$ correspondant à des courants mesurés sur les phases de sortie du moteur,
   - Pour chaque valeur de courant de référence $(\overline{i_d})$, une étape de détermination par un module d'identification (M7) d'une valeur d'inductance $\left(L_d^{EST}\right)$ en fonction d'une valeur de courant de référence appliquée en entrée, de la valeur correspondante de courant déterminée à partir des courants mesurés sur les phases de sortie et d'une valeur d'inductance $(\hat{L}_d)$ prédéterminée ou variable,
   - Pour chaque valeur de courant $(i_d)$ déterminé à partir des courants mesurés sur les trois phases de sortie, mémorisation de la valeur d'inductance $\left(L_d^{EST}\right)$ correspondante déterminée lors de l'étape de détermination.

2. Procédé selon la revendication 1, **caractérisé en ce que** le courant de référence $(\overline{i_d})$ suit un profil variable en partant d'une valeur initiale définie $\left(\overline{i_d}^{min}\right)$ minimale ou maximale jusqu'à une valeur finale $\left(\overline{i_d}^{max}\right)$, respectivement maximale ou minimale.

3. Procédé selon la revendication 2, **caractérisé en ce que** le courant de référence $(\overline{i}_d)$ prend plusieurs valeurs successives en suivant un profil linéaire.

4. Procédé selon la revendication 2, **caractérisé en ce que** le courant de référence prend plusieurs valeurs successives en suivant un profil en escalier à plusieurs échelons, chaque valeur du courant de référence suivant un échelon dudit profil.

5. Procédé selon l'une des revendications 1 à 4, **caractérisé en ce qu'**il comporte une phase d'exploitation qui suit la phase d'identification et **en ce que** ladite phase d'exploitation consiste à exploiter chaque valeur d'inductance $\left(L_d^{EST}\right)$ mémorisée lors de la phase d'identification pour déterminer un flux de référence à appliquer au moteur.

6. Système de commande d'un moteur électrique (M) synchrone à réluctance variable, comprenant une unité de traitement, ladite unité de traitement étant associée à un convertisseur de puissance connecté par des phases de sortie (a, b, c) audit moteur électrique (M) et agencé pour appliquer des tensions variables audit moteur électrique en exécutant une loi de commande, cette loi de commande comportant :

   - Un module de génération (M8) d'une trajectoire d'un courant de référence $(\overline{i_d})$,
   - Un module de détermination, pour chaque valeur du courant de référence, d'une valeur de courant $(i_d)$ déterminée à partir de courants mesurés sur les phases de sortie,
   - Un module d'identification (M7) de chaque valeur d'inductance $\left(L_d^{EST}\right)$ du moteur électrique à partir d'une valeur de courant de référence ($\overline{i}_d$), de la valeur de courant ($\overline{i}_d$) correspondante déterminée à partir des courants mesurés sur les phases de sortie et d'une valeur d'inductance ($\hat{L}_d$) prédéterminée ou variable,

- Pour chaque valeur de courant ($i_d$) déterminé à partir des courants mesurés sur les trois phases de sortie, un module de mémorisation (M9) de la valeur d'inductance $\left(L_d^{EST}\right)$ correspondante déterminée.

7. Système selon la revendication 6, **caractérisé en ce que** le module de génération du courant de référence ($\overline{i}_d$) est agencé pour lui faire suivre un profil variable en partant initialement d'une valeur définie $\left(\overline{i}_d^{min}\right)$ minimale ou maximale jusqu'à une valeur finale $\left(\overline{i}_d^{max}\right),$ respectivement maximale ou minimale.

8. Système selon la revendication 7, **caractérisé en ce que** le courant de référence ($\overline{i}_d$) prend plusieurs valeurs successives en suivant un profil linéaire.

9. Système selon la revendication 7, **caractérisé en ce que** le courant de référence ($\overline{i}_d$) prend plusieurs valeurs successives en suivant un profil en escalier à plusieurs échelons, chaque valeur du courant de référence suivant un échelon dudit profil.

**Patentansprüche**

1. Verfahren zur Steuerung eines synchronen Elektromotors (M) mit variabler Reluktanz, welches in einer Verarbeitungseinheit angewendet wird, wobei die Verarbeitungseinheit einem Leistungswandler zugeordnet ist, der durch Ausgangsphasen (a, b, c) mit dem Elektromotor (M) verbunden ist und dafür ausgelegt ist, ein Steuergesetz zum Anlegen variabler Spannungen an den Elektromotor auszuführen, wobei das Verfahren eine Phase der Identifikation eines Fluss-Induktivitätswertes des Elektromotors umfasst, wobei diese Identifikationsphase umfasst:

    - einen Schritt der Erzeugung eines Referenzstroms ($\overline{i}_d$) am Eingang des Steuergesetzes, wobei der Referenzstrom ($\overline{i}_d$) nacheinander mehrere Werte gemäß einem vorbestimmten Profil annimmt,
    - für jeden Referenzstromwert ($\overline{i}_d$) einen Schritt der Bestimmung eines Stromwertes ($\overline{i}_d$), der an den Ausgangsphasen des Motors gemessenen Strömen entspricht,
    - für jeden Referenzstromwert ($\overline{i}_d$) einen Schritt der Bestimmung, durch ein Identifikationsmodul (M7), eines Induktivitätswertes $\left(L_d^{EST}\right)$ in Abhängigkeit von einem am Eingang angelegten Referenzstromwert, dem entsprechenden Stromwert, der aus den an den Ausgangsphasen gemessenen Strömen bestimmt wurde, und einem vorbestimmten oder variablen Induktivitätswert ($\hat{L}_d$),
    - für jeden Stromwert ($\overline{i}_d$), der aus den an den drei Ausgangsphasen gemessenen Strömen bestimmt wurde, Speicherung des entsprechenden Induktivitätswertes $\left(L_d^{EST}\right),$ der im Schritt der Bestimmung bestimmt wurde.

2. Verfahren nach Anspruch 1, **dadurch gekennzeichnet, dass** der Referenzstrom ($\overline{i}_d$) einem variablen Profil folgt, ausgehend von einem definierten minimalen oder maximalen Anfangswert $\left(\overline{i}_d^{\ min}\right)$ bis zu einem maximalen bzw. minimalen Endwert $\left(\overline{i}_d^{\ max}\right).$

3. Verfahren nach Anspruch 2, **dadurch gekennzeichnet, dass** der Referenzstrom ($\overline{i}_d$) mehrere aufeinanderfolgende Werte annimmt, wobei er einem linearen Profil folgt.

4. Verfahren nach Anspruch 2, **dadurch gekennzeichnet, dass** der Referenzstrom mehrere aufeinander folgende Werte annimmt, wobei er einem treppenförmigen Profil mit mehreren Stufen folgt, wobei jeder Wert des Referenzstroms einer Stufe dieses Profils folgt.

5. Verfahren nach einem der Ansprüche 1 bis 4, **dadurch gekennzeichnet, dass** es eine Auswertungsphase umfasst, welche auf die Identifikationsphase folgt, und dadurch, dass diese Auswertungsphase darin besteht, jeden Induktivitätswert $\left( L_d^{EST} \right)$, der während der Identifikationsphase gespeichert wurde, auszuwerten, um einen Referenzmagnetfluss zu bestimmen, der an den Motor anzulegen ist.

6. System zur Steuerung eines synchronen Elektromotors (M) mit variabler Reluktanz, welches eine Verarbeitungseinheit umfasst, wobei die Verarbeitungseinheit einem Leistungswandler zugeordnet ist, der durch Ausgangsphasen (a, b, c) mit dem Elektromotor (M) verbunden ist und dafür ausgelegt ist, variable Spannungen an den Elektromotor anzulegen und dabei ein Steuergesetz auszuführen, wobei dieses Steuergesetz aufweist:

    - ein Modul zur Erzeugung (M8) einer Trajektorie eines Referenzstroms $(\overline{i}_d)$,

    - ein Modul zur Bestimmung, für jeden Wert des Referenzstroms, eines Stromwertes $(\overline{i}_d)$, der aus den an den Ausgangsphasen gemessenen Strömen bestimmt wird,

    - ein Modul zur Identifikation (M7) jedes Induktivitätswertes $\left( L_d^{EST} \right)$ des Elektromotors aus einem Referenz-stromwert $(\overline{i}_d)$, dem entsprechenden Stromwert $(\overline{i}_d)$, der aus den an den Ausgangsphasen gemessenen Strömen bestimmt wurde, und einem vorbestimmten oder variablen Induktivitätswert $(\hat{L}_d)$,

    - für jeden Stromwert $(\overline{i}_d)$, der aus den an den drei Ausgangsphasen gemessenen Strömen bestimmt wurde, ein Modul zur Speicherung (M9) des bestimmten entsprechenden Induktivitätswertes $\left( L_d^{EST} \right)$.

7. System nach Anspruch 6, **dadurch gekennzeichnet, dass** das Modul zur Erzeugung des Referenzstroms $(\overline{i}_d)$ dafür ausgelegt ist zu bewirken, dass dieser einem variablen Profil folgt, anfänglich ausgehend von einem definierten minimalen oder maximalen Wert $\left( \overline{i}_d^{\,min} \right)$, bis zu einem maximalen bzw. minimalen Endwert $\left( \overline{i}_d^{\,max} \right)$.

8. System nach Anspruch 7, **dadurch gekennzeichnet, dass** der Referenzstrom $(\overline{i}_d)$ mehrere aufeinanderfolgende Werte annimmt, wobei er einem linearen Profil folgt.

9. System nach Anspruch 7, **dadurch gekennzeichnet, dass** der Referenzstrom $(\overline{i}_d)$ mehrere aufeinanderfolgende Werte annimmt, wobei er einem treppenförmigen Profil mit mehreren Stufen folgt, wobei jeder Wert des Referenzstroms einer Stufe dieses Profils folgt.

**Claims**

1. Process for controlling a variable-reluctance synchronous electric motor (M), implemented in a processing unit, said processing unit being coupled to a power converter connected by output phases (a, b, c) to said electric motor (M) and designed to execute a control scheme for applying variable voltages to said electric motor, said process comprising a phase of identifying a flux inductance value of said electric motor, this identification phase comprising:

    - a step of generation of a reference current $(\overline{i}_d)$ at the beginning of said control scheme, said reference current $(\overline{i}_d)$ taking successively several values according to a predetermined profile,

    - for each reference-current value $(\overline{i}_d)$, a step of determination of a current value $(i_d)$ corresponding to currents measured in the output phases of the motor,

    - for each reference-current value $(\overline{i}_d)$, a step of determination, by an identification module (M7), of an inductance value $\left( L_d^{EST} \right)$ as a function of a reference-current value applied at the input, of the corresponding current value determined on the basis of the currents measured in the output phases, and of a predetermined or variable inductance value $(\hat{L}_d)$,

    - for each current value $(i_d)$ determined on the basis of the currents measured in the three output phases, storage of the corresponding inductance value $\left( L_d^{EST} \right)$ determined in the course of the determination step.

2. Process according to Claim 1, **characterized in that** the reference current $(\overline{i}_d)$ follows a variable profile running from a defined minimal or maximal initial value $\left( \overline{i}_d^{\,min} \right)$ until a respectively maximal or minimal final value $\left( \overline{i}_d^{\,max} \right)$.

3. Process according to Claim 2, **characterized in that** the reference current ($\overline{i}_d$) takes several successive values by following a linear profile.

4. Process according to Claim 2, **characterized in that** the reference current takes several successive values by following a staircase profile having several rungs, each value of the reference current according to a rung of said profile.

5. Process according to one of Claims 1 to 4, **characterized in that** said process includes an operating phase which follows the identification phase and **in that** said operating phase consists in utilising each inductance value $(L_d^{EST})$ stored in the course of the identification phase, in order to determine a reference flux to be applied to the motor.

6. System for controlling a variable-reluctance synchronous electric motor (M), including a processing unit, said processing unit being coupled to a power converter connected by output phases (a, b, c) to said electric motor (M) and designed to apply variable voltages to said electric motor by executing a control scheme, this control scheme comprising:

   - a module for generation (M8) of a path of a reference current ($\overline{i}_d$),
   - a module for determination, for each value of the reference current, of a current value ($i_d$) determined on the basis of currents measured in the output phases,

   - a module for identification (M7) of each inductance value $\left(L_d^{EST}\right)$ of the electric motor on the basis of a reference-current value $\overline{i}_d$), of the corresponding current value ($\overline{i}_d$) determined on the basis of the currents measured in the output phases, and of a predetermined or variable inductance value ($\hat{L}_d$),
   - for each current value ($i_d$) determined on the basis of the currents measured in the three output phases, a module for storage (M9) of the determined corresponding inductance value $\left(L_d^{EST}\right)$.

7. System according to Claim 6, **characterized in that** the module for generation of the reference current ($\overline{i}_d$) is designed to make said current follow a variable profile running initially from a minimal or maximal defined value $\left(\overline{i}_d^{\,min}\right)$ until a respectively maximal or minimal final value $\left(\overline{i}_d^{\,max}\right)$.

8. System according to Claim 7, **characterized in that** the reference current ($\overline{i}_d$) takes several successive values by following a linear profile.

9. System according to Claim 7, **characterized in that** the reference current ($\overline{i}_d$) takes several successive values by following a staircase profile having several rungs, each value of the reference current according to a rung of said profile.

**Fig. 1**

*Fig. 2A*

*Fig. 2B*

**Fig. 3A**

**Fig. 3B**

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1641114 A1
- EP 2453248 A1
- US 2007241715 A1
- WO 2012000507 A1
- US 2013173193 A1